# EUROPEAN PATENT APPLICATION

(11) **EP 0 997 409 A2**
(43) Date of publication of application: **03.05.2000**
(21) Application number: 99119425.9
(22) Date of filing: 30.09.1999
(51) Int. Cl.: B65G 57/03, B65G 60/00, B65G 47/90

(54) **Apparatus and method for handling of cargo**

(30) Priority: 30.09.1998 FI 982116
(71) Applicant: RTS Pretech OY, 70461 Kuopio (FI)
(72) Inventor: Kinnunen, Arto, 70200 Kuopio (FI); Urpilainen, Arto, 70110 Kuopio (FI); Lahtinen, Sami, 33480 Ylöjärvi (FI)
(74) Representative: Hjelt, Pia Dorrit Helene

(57) **Abstract**

The present invention relates to an apparatus and a method for handling materials. The apparatus comprises gripper (10) for gripping materials, a joint structure (8) and a first conductor (1), to which the joint structure is fastened by means of a movable fastening point (11). The first conductor (1) contains at least one curved portion (4), which allows the direction of the path of the movable fastening point (11) on the first conductor to be altered. The apparatus further comprises a second conductor (2), to which the joint structure (8) is fastened by means of a second movable fastening point (12). The drive device (6) operates in order to move the joint structure (8) along the first conductor (1) and correspondingly the second conductor (2). The conductors (1, 2) are positioned in relation to each other whereby the movement of the joint structure (8) by means of the drive device (6) in relation to the first conductor (1) provides in the opening/closure of the joint structure.

## Description

This invention relates to handling materials in general, and especially, but not solely, to the transfer and positioning of successive materials such as pallets and similar materials between different work stages and/or work centers.

The materials handling sector is familiar with the use of special processing devices for transferring various processed objects between different work stages and/or work centers. Materials refer here to either to individual goods or to pallets or other such materials used for the transportation or transfer of several individual materials which need to be transferred and/or positioned between work centers or stages. One example of materials handling performed in industry is the transfer of empty pallets from a conveyor line to a place where plastic materials picked from a plastic compressor can be transferred using a robot, after which the flu pallet is transferred to the next conveyor line and on to further processing.

For example, pallets have been transferred using processing devices which comprise numerous pneumatic cylinders, in the ends of which suitable grippers have been fitted. The grippers have been used to pluck a pallet on a special conveyor line and transfer/feed it to the next work center or stage, or to the work area of another cylinder and gripper or, e.g., robot.

Devices based on the use of pneumatic cylinders have proven in themselves to be a solution that operates reliably and offers adequate motion and gripping accuracy. However, some drawbacks are associated with devices of this kind. One of these relates to the stroke time of the material handlers implemented by means of pneumatic cylinders, i.e., to the speed at which they are able to process successive materials. For example, in the case of a processor sewing the aforesaid plastic compressor's robot, the stroke time in connection with a change of pallet with existing solutions is in the region of 20 seconds. A single device has also required several pneumatic cylinders, each of which requires its own pneumatic hose, valve and control system, which has increased both the complexity and price of the devices, and rendered them prone to various malfunctions.

It is an object of the present invention to provide a solution whereby the disadvantages of the prior art can be overcome, and whereby the stroke time of successive processed materials can be reduced appreciably. An object is also for a solution which will provide a simpler apparatus structure and enable the use of several pneumatic cylinders or other such operating devices to be avoided.

The invention is based on the basic insight that by providing a structure where a single drive device is used to provide the motion of the gripper in several and at least two different directions, fundamental benefit is obtained in both the stroke time and in the simplification of the structure. The basic concept of the invention involves the use of at least one conductor, where the fastening point of the joint structure bearing the gripper, which moves on top of it, alters its direction of motion as it travels past a curved portion of the conductor at the same time as the other fastening point of the joint structure moves on a second conductor in a direction which differs from the first conductor's altered direction, or remains still.

More precisely, the apparatus according to the present invention is characterized by what is presented in the characterizing part in enclosed independent patent claim 1. The method according to the present invention is characterized by what is presented in the characterizing part in enclosed independent patent claim 8.

In accordance with one preferred embodiment of the present invention, the first conductor comprises a horizontal portion, two curved portions of approx. 90° C at each end of the horizontal portion and substantially vertical portions following the curved portions. The said first conductor is used to bear movably the joint structure, which in its turn bears the gripper. The movement of the joint structure's fastening point has been preferably implemented using one and the same operating apparatus in all of the aforesaid three portions of the first conductor.

The present invention is used to obtain a number of significant advantages. It can be used to provide an apparatus in which several separate cylinders are not required for transferring the materials. A significant advantage is also obtained in the form of an appreciably reduced stroke time. In some cases, this allows several robots, work centers or other such locations to be served using the same materials handler. As the handler's essential functions can be implemented by means of a single drive device, such as an electric motor, an advantage is also obtained in that the general structure and control of the apparatus are simplified, overall costs are reduced and reliability improves.

The invention and its other objects and advantages are described in greater detail in the following example presentation with reference at the same time to the attached drawings, in which the corresponding reference numbers in the various figures refer to the corresponding features. In the drawings:
Figure 1 shows a simplified schematic presentation of one of the embodiments of the present invention viewed from the front of the equipment.
Figure 2 shows an apparatus according to Figure 1 from the side.
Figure 3a and 3b show in greater detail the joint structure and gripper used in the apparatus.
Figure 4 shows the details of a possible carriage which can be moved on a conductor.

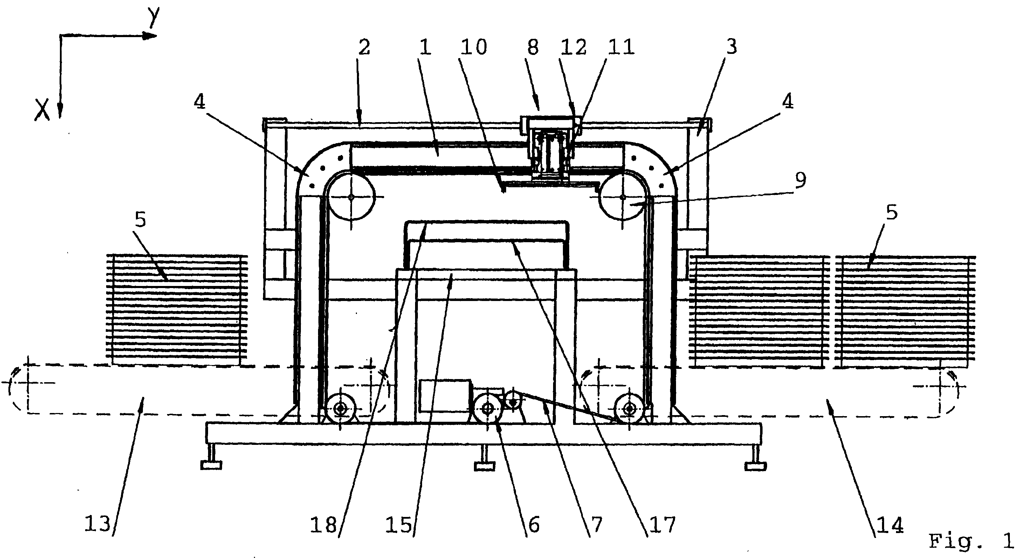

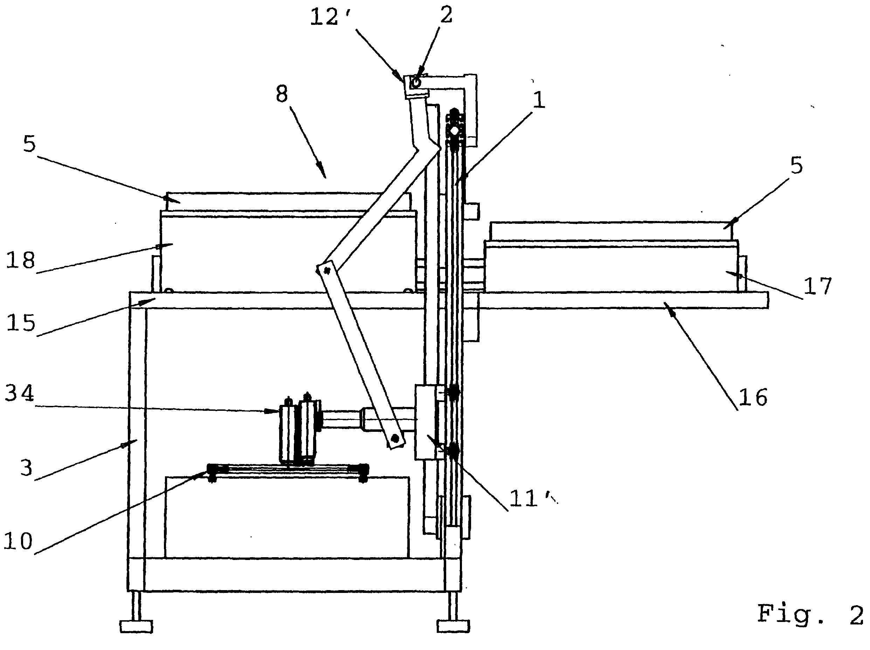

Figure 1 shows a presentation, in principle, of one materials handler according to the invention viewed from the front and figure 2 shows the same apparatus from the side. More precisely, figures 1 and 2 show a pallet handling apparatus which serves the robot (not shown) of a plastic compressor. Extending along both sides of the apparatus body portion 3 are conveyor lines, i.e., belt conveyors 13 and 14, of which conveyor 13 feeds the empty pallets 5 in the pile to the work area of the handler's gripper 10, and conveyor 14 transports the fully stacked pallets to the next work stages. Although conveyors 13 and 14 are presented as belt conveyors and as running alongside the apparatus, they can also be other types of conveyors and their direction can differ from that shown in figures 1 and 2.

The handled materials can in theory be any types of materials which can be gripped using gripper 10 and which need to be moved between two different stations, such as from conveyor 13 to robot work area 16. Gripper 10, in turn, comprises means that are suitable in a given case or universal means for the materials, e.g., for gripping pallet 5. The example apparatus according to the figures is intended for handling pallets 5, onto which pallets 5 plastic materials, such as telephone or similar cases, picked using a robot (not shown) from a plastic compressor (not shown) are placed at station 16. The fully stacked pallet is transported onwards in the manufacturing process and is replaced using the apparatus with a new empty pallet at station 16.

The apparatus is thus equipped with feed/loading station 16, on top of which pallets 5 are placed in the robot work area, and at which station the robot then stacks the finished materials which it has picked from the plastic compressor on pallet 5. The pallets at stacking station 16 are brought from transfer station 15 using a lateral conveyor apparatus, which consists of two loaders 17 and 18 which move crosswise in relation to each other, in other words, on the pendulum principle. More precisely, the loaders moving between stations 15 and 16 according to figures 1 and 2 comprise upside-down U-shaped structures, of which the lower loader 17 can travel from underneath the higher loader 18 also when pallet 5 is on top of it. The loaders can be moved between stations 15 and 16 by means, e.g., of roller equipment or slide rails. Loaders 17 and 18 can be moved, e.g., by means of armless cylinders fastened to their side, a chain or belt drive or similar solution (not shown). The solution based on the pendulum principle makes it possible for there always to be a pallet at the actual work station 16, onto which materials can be stacked uninterruptedly.

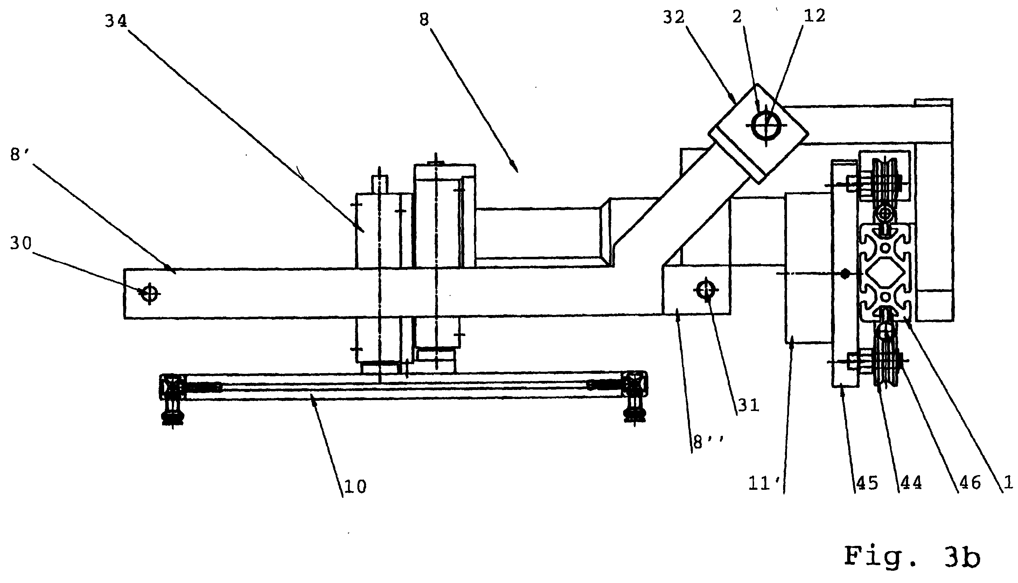

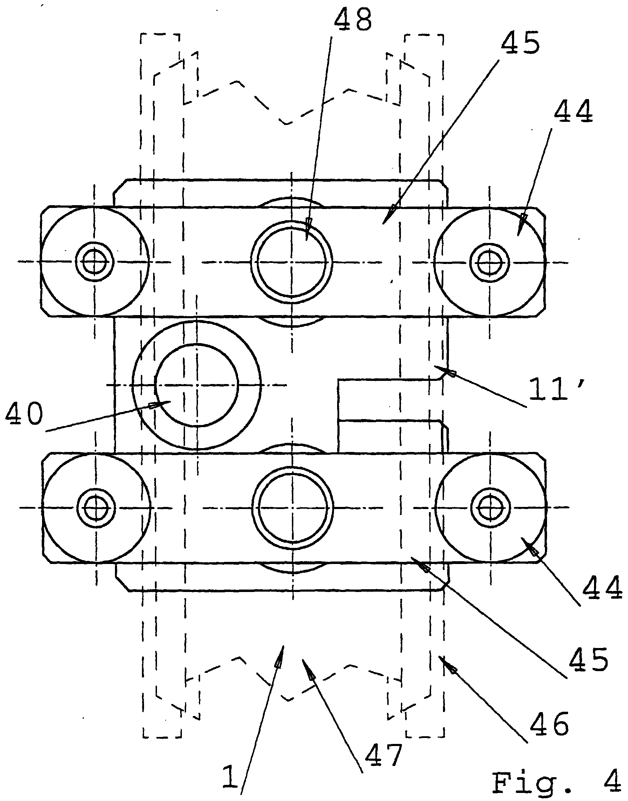

Figure 1 also shows the first conductor fastened to body 3, which comprises a horizontal portion, i.e., which runs parallel to the Y axis, and a vertical portion, i.e., which runs parallel to the X axis. Between the conductor sections running in different directions are special curved corner portions 4, which are used to alter the direction of motion produced by conductor 1. Conductor 1 comprises two substantially round bars (see, e.g., Figure 3b) and a support section, such as an aluminum profile, between them. The structure and functioning of carriage 11' which provides the first fastening point 11 for joint structure 8, which is fitted movably to conductor 1, are explained in greater detail later in connection, inter alia, with the explanation of figures 3b and 4.

The second conductor 2 fastened to body 3 is positioned above the first conductor. This conductor 2 extends for its part substantially directly along the horizontal level. The second conductor can comprise, e.g., the round, bar-like conductor according to figure 2, but can also be of some other suitable form and structure which provides a sliding conductor for the other fastening point of joint structure 8. The second movable fastening point 12 of elbow joint 8 has been implemented in conductor 2 by means of moving sliding portion 12'.

The apparatus also comprises a drive device, such as an electric motor 6 and the belt 7 used by it, which in turn is fastened to carriage 11'. Belt 7 can be, e.g., a toothed belt or a V-belt, or, e.g., a suitable chain or any other similar instrument which transfers the movement provided by drive device 6 to carriage 11'. Belt 7 has been adapted to turn essentially around control rollers, i.e., turning rollers 9 following conductor 1. The example shows the belt with four control rollers 9, but their number can also differ from that shown. The functioning and principle of the operating arrangement are described in greater detail later in this explanation.

Figures 1 and 2 reveal the fundamental difference compared to prior art handling apparatus, that whereas in the prior art a single pallet was served with several cylinder arms or using some other such separate drive device with a separate gripper, the solution now presented allows several pallets 5 to be served with a single gripper 10.

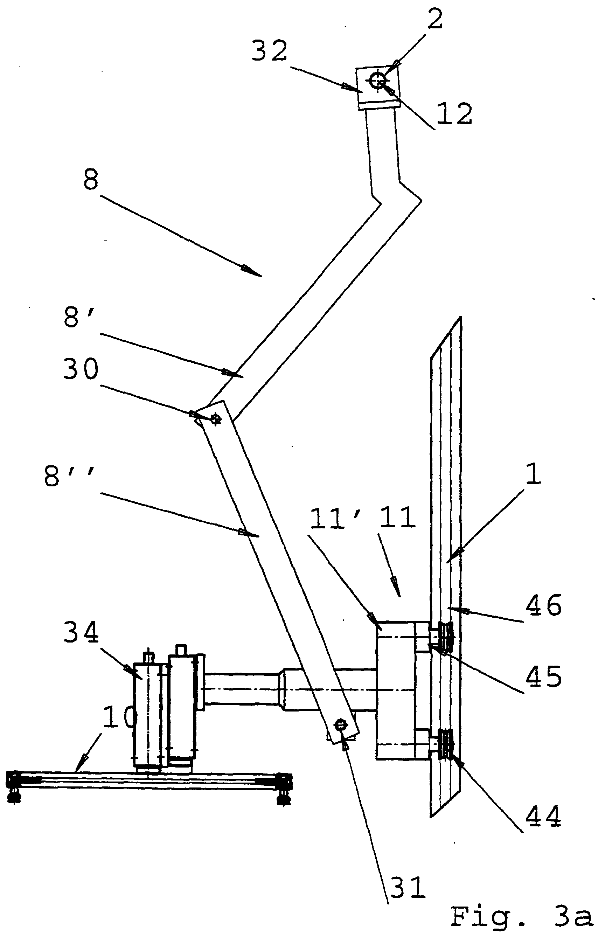

Figures 3a and 3b present in greater detail joint structure 8, which has been adapted to bear and move gripper 10. In figure 3a, the joint structure is in the down position, in other words, gripper 10 is on top of either line 13 or line 14 and carriage 11' is in the vertical portion of conductor 1. In figure 3b, joint structure 8 and gripper 10 are in the up position, i.e., on top of transfer station 15, and carriage 11' is located in the horizontal portion of conductor 1.

Joint structure 8 consists of a two-pan (8', 8'') elbow joint, which joint portions 8' and 8'' turn in relation to each other around joint point 30. The elbow joint is fastened from its upper end 32 so that it can be moved from point 12 to the said second conductor 2. The part of the elbow joint 8'' is fastened jointly at point 31 of carriage structure 11, and the lower fastening point 11 of joint structure 8 in relation to body 3 of the apparatus has been achieved by means of carriage 11' in conductor 1. The arrangement is such that as conductors 1 and 2 extend at a constant distance from each other the elbow joint also remains in a constant position. Altering the distance between conductors 1 and 2, and thereby the distance between fastening points 11 and 12 results correspondingly in a change in the mutual positions of joint portions 8' and 8'' and thereby in the location vertically of gripper 10 fitted in the elbow joint as shown in the figures.

Joint structure 8 further comprises cylinder 34, which has been adapted to move gripper 10 in an upward-downward direction. Cylinder 34 is used to provide the movement of gripper 10 vertically when the elbow joint is on horizontal conductor 1 in the so-called medium position, in other words, at transfer station 15 on top of loader 17 or 18. Gripper 10 has been adapted to descend for gripping a fully stacked pallet 5, and correspondingly, for lowering a new empty pallet onto the loader. It should be mentioned at this point that cylinder 34 can be replaced with any device which provides movement, such as a linear motor.

The apparatus is fitted with a suitable sensor, such as an inductive sensor, for observing the correct position of the joint structure in relation to the said transfer station 15 so that the horizontal movement of the joint, and of gripper 10 in particular, can be halted at the required point of the horizontal course and the pallets can be positioned, and correspondingly, picked out in the required manner. Drive device 6 is controlled on the basis of this sensor information. This sensoring of the horizontal position is the only point in the apparatus which requires this type of sensoring, since the vertical position of gripper 10 is observed by means of the so-called flexible head described in the following, instead of the vertical position being observed by means of, e.g., a pulse counter according to the prior art.

The flexible head (not shown) of the gripper has been adapted to collide with the materials and to notify apparatus control of this collision, so that control is able to halt the gripper at the correct height without the need for precise advance position programming and pulse counters. In its general form, the flexible head comprises, e.g., a spring- or pneumatically loaded element the collision of which head with the materials causes the element to press inwards, in response to which the control system receives a notification that gripper 10 is at a predetermined distance from the approaching object, such as the surface of conveyors 13 or 14, loaders 17 or 18 or pallet 5 in a stack on conveyor 13 or 14.

Carriage 11' which can be moved on conductor 1 is equipped wit suitable bearings 40 (see figure 4) whereby elbow joint 8 fastened to carriage 11' can turn on these bearings in relation to the carriage, which allows the path of the carriage to be altered between courses x and y without affecting the position of the elbow joint. The carriage can hereby be turned, e.g., 90° between the horizontal portion and the vertical portion of conductor 1 and move in both portions with the support of rollers 44.

Conductor 1 consists in the example of two parallel bars 46 with a round profile and of intermediate part 47 which links them together, an aluminum profile in the example in figure 3b. Carriage 11' is equipped with four concave rollers 44, which preferably are fastened flexibly by means of fastening arms 45 to the body of carriage 11'. The fastening arms can turn/flex slightly around their fastening points 48. A suitably flexible fastening ensures the even travel of the carriage also when turning, i.e., in curved portion 4.

The functioning of the apparatus presented (one job rotation) begins when joint structure 8 is driven on top of conveyor 13 whereby carriage 11' is transferred over the curved portion 4 of conductor 1 and begins to move on conductor 1 which extends downwards. Carriage 11' and thereby joint 8 are moved by means of belt 7, which is fastened to the carriage and turns around control wheels 9, which belt is operated by drive device 6 operated by the electric motor. At the same time as carriage 11' is driven downwards on conductor 1, the upper fastening point 12 now remains in place horizontally on conductor 2, in which case elbow joint 8 opens under the influence of the downward movement of carriage 11'. Gripper 10 then also moves downwards. The downward movement of gripper 10 can be stepped up by using a cylinder or other such device 34. When the gripper's flexible head impacts with uppermost pallet 5, information is obtained about the current position of the gripper in relation to this pallet, and the movement of gripper 10 can be halted at the required height on the basis of this information. Gripper's 10 fastening means then grip empty pallet 5, and it can then start to be transferred towards transfer station 15.

At this stage, drive device 6 is rotated in the opposite direction, and cylinder 34 is drawn inwards, in which case gripper 10 and pallet 5 fastened to it rise upwards away from conveyor 13. Carriage 11' is moved upwards until it arrives at curved portion 4, where its course turns horizontal. Gripper 10 has then reached the height which is required for the unobstructed conveyance of the pallet to the feeder loader (17 or 18). Drive device 6 continues to rotate belt 7 and the pallet is transferred towards lateral transfer station 15 in the middle of the apparatus. The joint structure which is moved by means of carriage 11' then drags its upper fastening point 12 along the second conductor 2 as well, and elbow joint 8 is transferred in its entirety and maintaining its position towards transfer station 15 located in the middle of the apparatus. The apparatus sensor observes the joint structure approaching station 15, and carriage 11' is halted at a predetermined point on top of loader 17 or 18 in accordance with a command issued by control by halting drive device 6.

Pallet 5 is then lowered onto cylinder 34. When the flexible head impacts with the surface of feeder loader 17 or 18 at station 15, the apparatus control system receives information about the relative position of the pallet in relation to the surface of the free loader, and the pallet is lowered to its final height in response to this information. It thereby makes no difference control-wise whether upper feeder loader 18 or lower feeder loader 17 is at station 15, but, rather, the control system always lowers pallet 5 in the same way according to the height of the upper surface of the loader in question irrespective of the height in relation to, e.g., body 3 of the apparatus. Gripper's 10 fastening means are then detached from the pallet, and the gripper is lifted upwards so that pallet 5 can be moved laterally from beneath it and so that the fully stacked pallet arriving from station 16 can be transferred to beneath the gripper.

The functioning of the pallet's lateral transfer device is based on the basic idea that one of the feeder loaders is available for use by station 15 and the other by station 16. The loaders can move crosswise in relation to each other, and, in accordance with the preferred embodiment, when one of the loaders takes an empty pallet to station 16 a fully stacked pallet arrives at station 15.

Gripper 10 is then lowered so that it can grip the ready, fully stacked pallet which has been transferred to station 15. The pallet is gripped, and is transferred to conveyor 14 using drive device 6 and belt 7 via the other curved portion in a similar way as in the case of an empty pallet.

The aforesaid solution can be used to obtain a substantial improvement in the stroke time in particular. Tests performed with a prototype have achieved stroke times of approx. 3-5 seconds, which is a substantial improvement compared to the stroke times of approx. 20 seconds obtained by means of the prior art pallet handling apparatus based on cylinders. The structure of the apparatus has also been simplified. The invention has thus provided an apparatus and method which can be used to avoid several shortages in the prior art and to obtain a considerable advantage compared to them.

It should be noted that the foregoing examples of the embodiments of the invention are not intended to restrict the scope of protection defined in the appended claims, but, rather, that the claims are intended to cover all modifications, similarities and alternatives that are included within the spirit and scope of the invention as set forth by the claims appended hereto.

## Claims

1. An apparatus for materials handling comprising:
a gripper (10) for gripping materials,
a joint structure (8), the opening/closure of which has been adapted to provide at least some of the gripper (10) movement in one direction (x),
a first conductor (1), to which the joint structure is fastened by means of the movable first fastening point (11), **characterized** in that
the first conductor (1) contains at least one curved portion (4) to allow a change in the direction of the path of the first fastening point (11) moved on the first conductor, and that the apparatus further comprising
a second conductor (2), to which the joint structure (8) is fastened by means of a second fastening point (12),
a drive device (6) for moving the joint structure (8) along the first conductor (1) and correspondingly the second conductor (2) with the support of the corresponding fastening points (11, 12),
the conductors (1, 2) being positioned in relation to each other whereby the movement of the joint structure (8) by means of the drive device (6) in relation to the first conductor (1) provides in the opening/closure of the joint structure after the direction of the path of the first fastening point (11) differs from the direction of the path of the second fastening point.

2. An apparatus according to claim 1, **characterized** in that the first conductor comprises two curved portions (4), both of which provide in a 90° change in the direction of the path of the first fastening point (11).

3. An apparatus according to claim 1 or 2, **characterized** in that the drive device (6) which provides the movement of the first fastening point (11) in the direction of at least two different paths (y, x) comprises an electric motor (20), a belt or a chain (21) adapted to be rotated by the electric motor, which belt or chain is fastened in relation to the first fastening point (11) such as the carriage (11') which provides the first fastening point.

4. An apparatus according to any one of the preceding claims, **characterized** in that the joint structure (8) is an elbow joint consisting of two parts (8', 8'') and of a joint point (30) between them, and that it comprises a device (34) for moving the gripper (10) in one direction.

5. An apparatus according to any one of the preceding claims, **characterized** in that the gripper (10) fitted in the joint structure (8) has been adapted to move horizontally (y) parallel to the first and second conductors (1, 2) with the support of fastening points (11, 12) that can be moved correspondingly horizontally (y), and vertically (x) parallel to the vertical portion of the first conductor (1) and with the support of the first fastening point (11) which can be moved on the vertical portion at the same time as the horizontal (Y) movement of the second fastening point (12) is halted.

6. An apparatus according to any one of the preceding claims, **characterized** in that it comprises an apparatus for the lateral transfer of materials (5), including:
a transfer station (15), onto which the gripper (10) places the materials (5) brought to the lateral transfer apparatus and from which the gripper picks materials that are to be transferred to the successive stage (14),
a feeder station (16), in which the work stage served by the handling apparatus can perform predetermined actions on the materials (5),
a first and second loader (17, 18), which have been adapted to move between the transfer station (15) and the feeder station (16) on superimposed tracks whereby they can bypass each other.

7. An apparatus according to any one of the preceding claims, **characterized** in that the gripper (10) is provided with a flexible head which observes its relative position.

8. A method for handling materials in which the material is gripped using a gripper fastened to a joint structure at the first station, the material fastened to the gripper is transferred by means of the joint structure from the first station to the second station, which transfer includes movement along at least two different paths, where the opening/closure of the joint structure which bears the gripper provides at least partly to movement along the gripper's other path, **characterized** in that
the first fastening point of the joint structure is moved on the first conductor,
the second fastening point of the joint structure is moved on the second conductor,
the opening/closure of the joint structure is adjusted by influencing the directions of the said fastening points by moving at least one of the said two fastening points past the deviation in the corresponding conductor, and
the said fastening point moved in the deviated direction is moved using the same drive device as before the deviation in direction.

9. A method according to claim 8, **characterized** in that the movement in at least one direction of the joint structure and of the gripper fastened to it is provided by means of a belt or chain fastened to one fastening point and by means of a drive device adapted to rotate it, such as an electric motor rotating in two directions.

10. A method according to claim 8 or 9, **characterized** in that it comprises a step of acceleration of the movement of the gripper in one direction by means of an apparatus, such as a cylinder, provided into the joint structure.
